# EUROPEAN PATENT APPLICATION

(11) **EP 1 069 733 A2**
(43) Date of publication of application: **17.01.2001**
(21) Application number: 00202400.8
(22) Date of filing: 06.07.2000
(51) Int. Cl.: H04L 12/40

(54) **A controller area network**

(30) Priority: 14.07.1999 GB 9916359
(71) Applicant: NEW HOLLAND U.K. LIMITED, Basildon, Essex SS14 3AD (GB)
(72) Inventor: Penon, Patrick, Chelmsford, Essex CM2 0QX (GB)
(74) Representative: Vandenbroucke, Alberic

(57) **Abstract**

A controller area network (10) includes a plurality of nodes (14-19), the CAN (10) having a bus (11) including two or more signal wires (12, 13) the ends of which at each node (14-19) define respective first and second bus terminations. Each node (14-19) includes switches for optionally connecting the first and second ends of each respective signal wire (12, 13) together, whereby the node (14-19) is operable in a transparent mode, and switches for connecting a terminating resistor between two signal wires (12, 13) selectively at either the first termination or the second termination. Each node (14-19) also includes a programmable device connectable to the bus (11), and switches for connecting the programmable device selectively to either the first termination or the second termination. The switches operate under the control of the programmable devices and a plurality of the programmable devices include a fault detector for detecting faults in the CAN (10). Upon detection of a fault by one of the fault detectors, the programmable devices at each node (14-19) terminate the CAN (10) at the first or second termination, or cause transparency of the node (14-19) to permit continuous functioning of at least part of the CAN (10) regardless of the number or nature of the faults.

## Description

The invention relates to a controller area network (CAN) for use in real-time control, diagnostics and manufacturing support applications especially, but not exclusively, in motor vehicles such as tractors, combine harvesters, forage harvesters and construction industry.

CAN's are also used in other types of vehicles such as boats and cars, and also in static installations such as industrial machines.

A controller area network is an assembly of electrical and electronic components for controlling a number of functional features in a machine such as a tractor. In a CAN there is a bus interconnecting a number of nodes, each of which nodes contains a programmable device. If the CAN is employed for use in a motor vehicle, the programmable devices may be responsible for controlling items such as the engine management system, the hydraulics, the transmission and the instrument display.

The interconnecting bus, typically comprising two signal wires, allows digital data to be communicated between each of the programmable devices in one direction at a time. Termination of the ends of the bus is necessary to prevent back reflection of digital data when it reaches the end of the bus and so avoid the distortion of other digital data travelling in the bus. Typically a resistor is connected between the ends of the two signal wires at either end of the bus, so terminating it.

If a fault occurs in the bus, however, the bus is no longer terminated correctly since bus ends exist on either side of the fault. The existence of an uninterrupted bus end prevents the efficient communication of the digital data between the programmable devices, as a result of the aforementioned signal reflection. Without information, which is required from the other programmable devices in the CAN, the programmable devices may not function correctly resulting in possible failure of the CAN.

A CAN system, proposed in WO-A-9830961, seeks to overcome this problem by providing a bus which is split into sections, wherein each section is connected to another by connecting circuits. Each of the connecting circuits is able to connect a node containing a programmable device to the bus, and also to terminate the CAN on either side of the node when required.

In WO-A-9830961 the connecting circuits monitor the status of the bus by trying to communicate with neighbouring connecting circuits. When a fault in the bus is detected, the connecting circuits terminate the bus on either side of the fault and inform the other connecting circuits. This allows digital data to continue travelling along the bus in the normal manner, providing each of the programmable devices with the information that they require.

A disadvantage of the CAN of WO-A-9830961 is that the occurrence of a further fault in the bus means that digital data cannot travel all of the way along the bus to all of the programmable devices. The CAN fails completely if more than one fault occurs.

Another CAN proposed in EP-A-0793156 also seeks to provide a solution to the problem. A bus extends between a number of nodes containing programmable devices. Each of the programmable devices is able to monitor identifying messages that are transmitted by the other programmable devices. A fault in the bus is detected by an identifying message transmitted from one programmable device not being detected by at least one other programmable device. When this occurs, default values are used by each of the programmable devices for any digital data that they are missing. This enables the CAN to continue functioning.

A disadvantage of the CAN of EP-A-0793156 however, is that, although the CAN continues to function when a fault occurs, its performance is greatly reduced since all of the programmable devices function independently of each other.

It is therefore an object of the present invention to overcome the drawbacks of the prior art by providing a CAN which continues to function in a proper way even when faults occur in the bus.

In accordance with a broad aspect of the present invention a CAN including a plurality of nodes is provided with a bus including two or more signal wires the ends of which at each node define respective first and second bus terminations, wherein each node includes:
- switches for optionally connecting the first and second ends of each respective wire together, whereby the node is operable in a transparent mode;
- switches for connecting a terminating resistor between the two signal wires selectively at either the first termination or the second termination;
- a programmable device operatively connectable to the bus; and
- switches for connecting the programmable device selectively to either the first termination or the second termination.

The CAN is characterised in that :
- the switches operate under the control of the programmable device; and
- a plurality of the programmable devices each include a fault detector for detecting faults in the CAN, the programmable devices being such as to select, on detection of a fault by a said fault detector, at each node: termination of the CAN at the first or second termination; or transparency of the node, whereby to permit continuous functioning of at least part of the CAN regardless of the number or nature of the faults.

Thus the controller area network of the invention advantageously allows the programmable devices to continue to function integrally with each other when a first fault occurs in the bus, and also allows the CAN to continue to function if a further fault or faults occur(s) in the bus.

Further, advantageous features are defined in the dependent claims hereof. More specifically :

The bus is preferably an annular network. The CAN may, when programmed, allow nodes to be removed from the bus, or nodes to be added to the bus up to a maximum of 30, without a need to reconfigure the bus or the remaining nodes.

It is also preferable that a voltage divider is used as the terminating resistor within each node. Advantageously, this enhances electromagnetic protection of the switching within the nodes.

In a preferred embodiment of the invention, each programmable device generates a differential bus signal which is encoded with specific voltage and timing data to be transmitted via the bus. The differential bus signal, when generated during idle bus periods of the programmable devices, is in a recessive state wherein the signal wires are undriven, and the differential voltage between the signal wires is zero. The differential bus signal, when generated during non-idle bus periods of the programmable devices, is in a dominant state wherein the bus signal wires are driven and the differential voltage between the signal wires is greater than a chosen value.

It is preferable that the fault detector of each of the programmable devices includes a counter. The counter records the number of errors it encounters during transmission of differential bus signals via the bus, whereby a said programmable device stops communicating with other programmable devices in the CAN when the number of communication errors recorded by its counter equals or exceeds 32.

When at least one of the programmable devices stops communicating with the other programmable devices in the CAN, means such as an isolator in each of the programmable devices may isolate and check each branch of the bus in a sequential manner.

In a further preferred embodiment of the invention, each of the programmable devices transmits unique and individual network management messages at periodic intervals. These network management messages are received by the other programmable devices in the CAN, and a first programmable device is recorded as "missing" when a second programmable device fails to receive at least one network management message transmitted by the first programmable device.

Preferably a first programmable device is recorded as having an intermittent fault if some but not all of a number of network management messages transmitted by the first programmable device within a chosen time period have been received by a second programmable device. A first programmable device may also be recorded as "inconsistent" if a network management message, transmitted by the first programmable device, does not contain parameters that are compatible with those transmitted by the second programmable device.

When a programmable device is recorded as missing by another programmable device, then each programmable device in the CAN may monitor the status of the programmable devices which are connected to their immediate left and immediate right in the bus. Each programmable device may then cause the CAN to terminate at the first or second termination of its node if it discovers that it is connected to a missing programmable device, or to select transparency of its node otherwise.

The ability to select between termination and transparency assists in permitting the CAN to continue functioning following discovery of a fault.

A preferred embodiment of the invention is now described, by way of a non-limiting example, with reference to the accompanying drawings, in which :
Figure 1 is a diagrammatic representation of a CAN according to the invention in the form of an annular network;
Figure 2 if a diagrammatic representation of a node of a CAN according to the invention, the node containing a programmable device;
Figure 3A is a diagrammatic representation of switches employed by the programmable device of Figure 2, when the CAN is terminated at the first termination;
Figure 3B is a diagrammatic representation of switches employed by the programmable device of Figure 2, when the node is in a transparent mode;
Figure 3C is a diagrammatic representation of switches employed by the programmable device of Figure 3, when the CAN is terminated at the second termination;
Figure 4 is a diagrammatic representation of a voltage divider which may be used as the terminating resistors in Figures 3A-C;
Figure 5A is a diagrammatic representation of a shield for use in conjunction with the CAN of the invention within a node of a vehicle engine, the transmission, the hydraulics, the display and the arm rest; and
Figure 5B is a diagrammatic representation of a similar shield for use within a node of a vehicle instrument cluster.

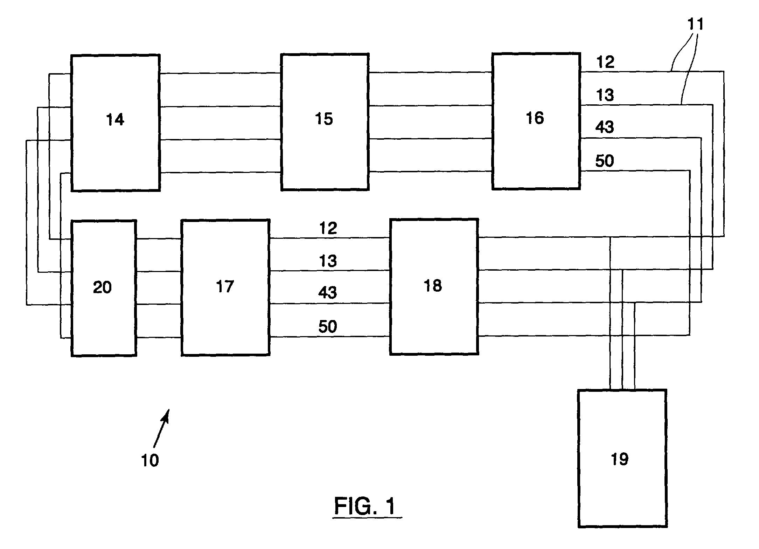

Figure 1 shows a controller area network 10 for a tractor. The CAN 10 includes a bus 11, comprising two signal wires 12, 13, which interconnects six nodes 14-19, and a further optional node 20 when required. The nodes 14-19 contain programmable devices which control the functions of the transmission, the display, the instrument cluster, the hydraulics, the arm rest and the engine of the vehicle. The optional node 20 contains a programmable device which controls the function of the 4 wheel drive capabilities of the vehicle when required.

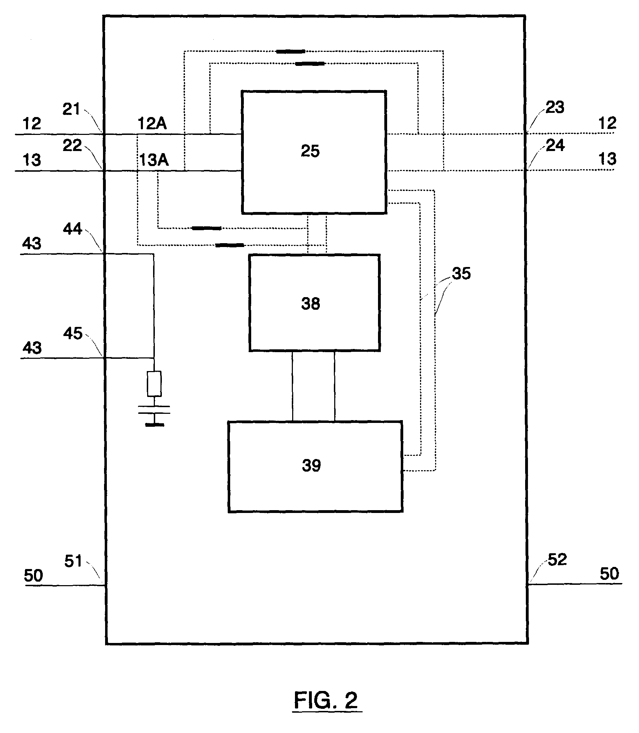

The first bus signal wire 12 is connected from a first bus output terminal 23 (Figure 2) of one of the nodes e.g. 14, to a first bus input terminal 21 of the next node 15, and so on, whereby it is connected between all of the nodes 14-20. The second bus signal wire 13 is connected in a similar manner between a second bus output terminal 24 and a second bus input terminal 22 of each of the nodes. The signal wires 12 and 13 are respectively designated the CAN H (CAN high) and CAN L (CAN low) wires, as is well known in the CAN art.

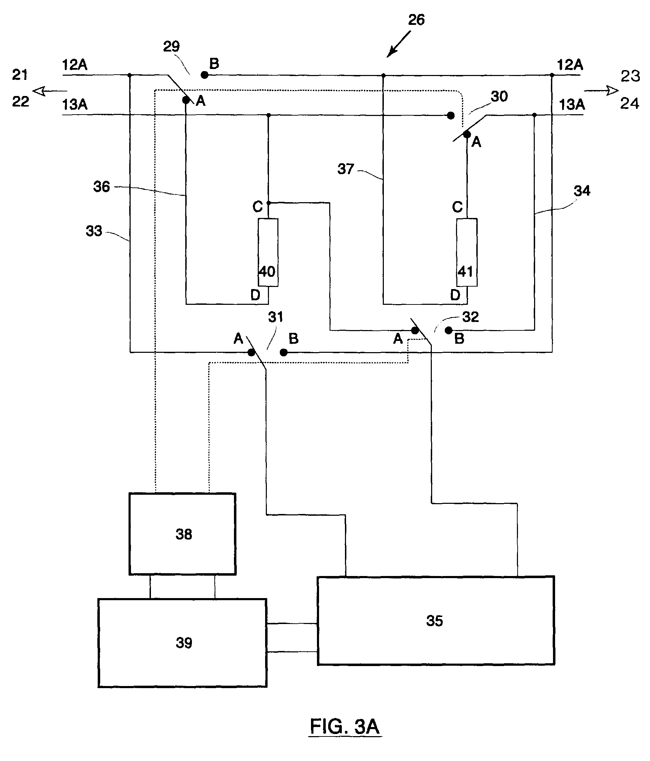

As can be seen from Figure 2, an active termination circuit 25 of a programmable device is connected between the bus input terminals 21, 22 and the bus output terminals 23, 24 of each of the nodes 14-20. The active termination circuit 25 includes a switching circuit 26 as shown in Figures 3A-C.

Each of the programmable devices also includes a transceiver circuit 35, a CAN controller 39 and a switch driving circuit 38. The transceiver circuit 35 is connected between the active termination circuit 25 and the CAN controller 39. The CAN controller 39 is also connected to the active termination circuit 25 by the switch driving circuit 38.

The switching circuit 26 as shown in Figures 3A-C, is connected across interconnecting wires 12A, 13A which interconnect the bus input terminals 21, 22 and the bus output terminals 23, 24, within each of the nodes 14-20. First and second switches 29, 30 are provided in the interconnecting wires 12A, 13A, and third and fourth switches 31, 32 are provided in two circuits 33, 34 which are connected in parallel to the interconnecting wires 12A, 13A respectively. Each of the switches 29-32 is switchable between two positions A and B.

A first resistor circuit 36 is provided between position A of the first switch 29 and the second interconnecting wire 13A, and a second resistor circuit 37 is provided between position A of the second switch 30, and the first interconnecting wire 12A.

The transceiver circuit 35 is connected across the third and fourth switches 31, 32 so that it may be connected to either of terminals A or B of each of these switches.

The switch driving circuit 38 is connectable to control the position of each of the switches 29-32.

When the switch driving circuit 38 drives all of the switches 29-32 to position A, as in Figure 3A, then both the first resistor circuit 36 and the second resistor circuit 37 are connected between the interconnecting wires 12A, 13A, effectively terminating two ends of the bus within the node. The transceiver circuit 35 is connected across the two interconnecting wires 12A, 13A, effectively connecting it across the bus input terminals 21, 22 of the node. This arrangement of the switches is a first termination mode of the node.

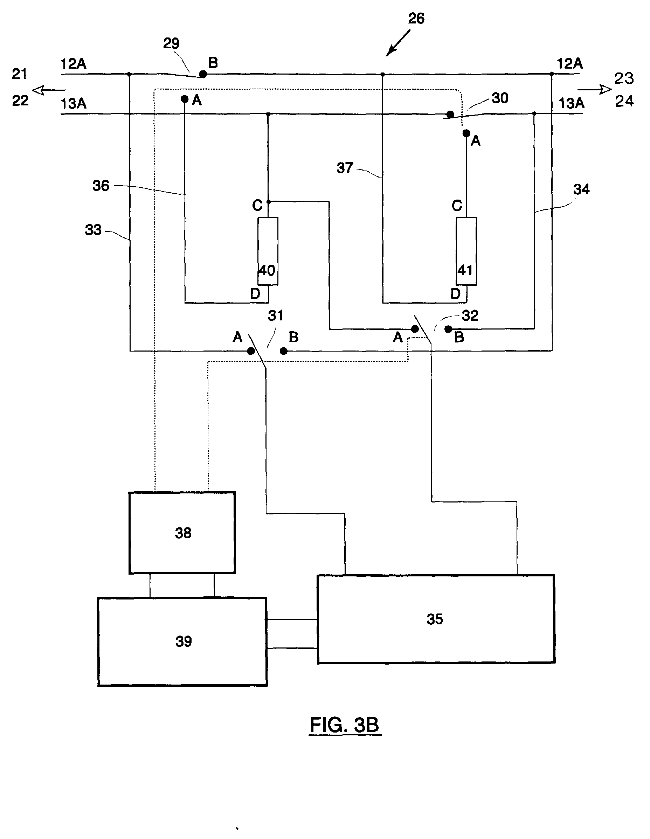

When the switch driving circuit 38 drives the first and second switches 29, 30 to position B, and the third and fourth switches 31, 32 to position A, as in Figure 3B, then the interconnecting wires 12A, 13A interconnect the bus terminal inputs 21, 22 and the bus terminal outputs 23, 24. The transceiver circuit 35 is also connected between the two interconnecting wires 12A, 13A. This arrangement of switches is the transparent mode of the node.

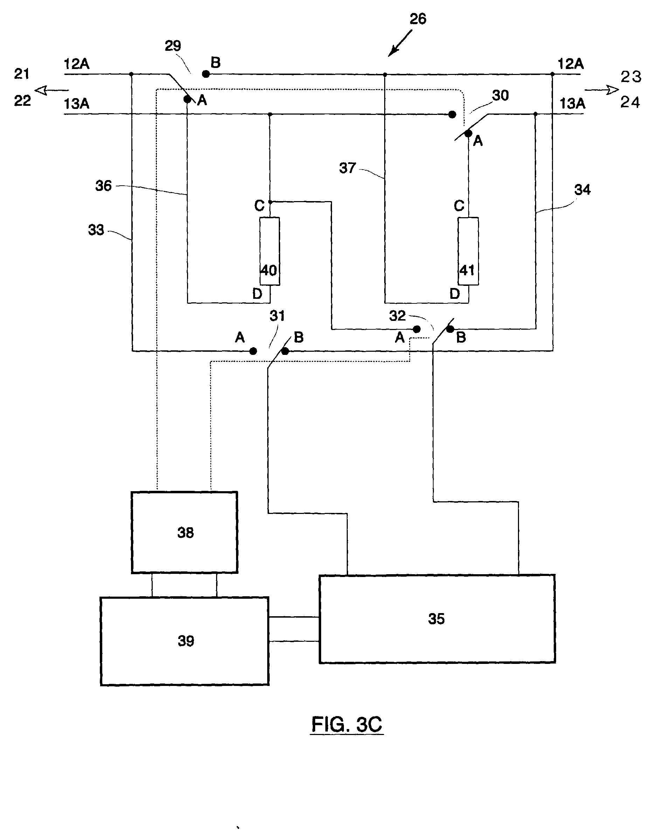

When the switch driving circuit 38 drives the first and second switches 29, 30 to position A, and the third and fourth switches 31, 32 to position B, as in Figure 3C, then both of the resistor circuits 36, 37 are connected between the interconnecting wires 12A, 13A, effectively terminating the two ends of the bus within the node. The transceiver circuit 35 is connected across the two interconnecting wires 12A, 13A, effectively connecting it across the bus output terminals 23, 24 of the node. This arrangement of the switches is the second termination mode of the node.

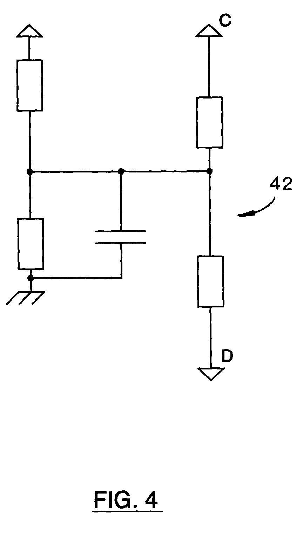

Each of the resistors 40, 41 which are contained within the resistor circuits 36, 37 of the switching circuit 26 is a voltage divider 42 of a per se known kind, as shown in Figure 4.

The controller area network also includes a shield wire 43, and a configuration wire 50, visible in Figure 1. The shield wire 43 extends around the CAN. As best seen in Figure 2, it is connected from a shield output terminal 45 of each node, to a shield input terminal 44 of the next adjacent node so that the shield wire 43 is connected between all of the nodes 14-20. The configuration wire 50 is connected in a similar manner between a configuration input terminal 51 and a configuration output terminal 52 of each of the nodes 14-20.

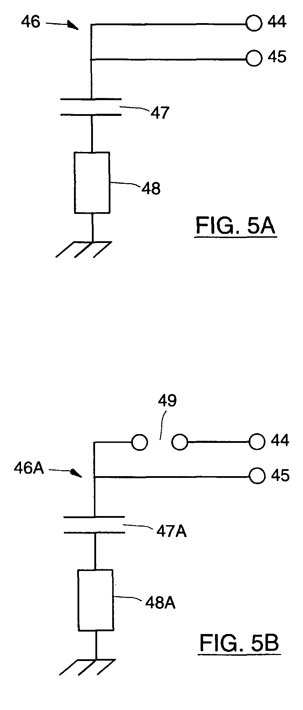

The shield input terminal 44 and the shield output terminal 45 of each of the nodes are connected within each of the nodes 14-20, apart from the node which contains the instrument cluster programmable device, by a shield 46 as shown in Figure 5A.

The shield 46 in Figure 5A includes a resistor 47 and a capacitor 48 connected in series to a clean ground. The node containing the instrument cluster programmable device is provided with a shield 46A as shown in Figure 5B. The shield 46A once again includes a resistor 47A and a capacitor 48A connected in series to a clean ground, but a break 49 is provided in the circuitry in order to break the shield loop within this particular node.

In use, a generator within each of the programmable devices in the controller area network 10 generates differential bus signals. Said differential bus signals are encoded with voltage and timing data, which are required by each of the other programmable devices within the CAN 10.

During periods when no data are transmitted around the bus 11 by the programmable devices, the differential bus signals are in a "recessive" state. In this recessive state, the bus signal wires 12, 13 are undriven and the differential voltage between them is zero.

During periods when data is transmitted around the bus 11 by the programmable devices, the differential bus signals are in a "dominant" state. In this dominant state, the bus signal wires 12, 13 are driven and the differential voltage between them is greater than a chosen value.

Each of the programmable devices includes a differential signal indicator to enable it to distinguish between the recessive state and the dominant state of the bus 11.

The data, that are communicated around the bus 11 in the form of the differential bus signals, determines the instructions that are relayed by the CAN controller 39, concerning each of the programmable devices, via the transceiver circuit 35, to the active termination circuit 25 of each of the programmable devices.

In normal operation the CAN 10 is terminated in either the first mode (Figure 3A) or the second mode (Figure 3C) within one of the nodes 14-20 (designated the "terminating mode"), whilst the remaining nodes 14-20 operate in the transparent mode (Figure 3B). This provides for conventional termination of the bus signal wires 12, 13, in order to prevent back reflection of any of the differential bus signals, and allows all of the programmable devices to communicate via the bus 11.

In the terminating node, the specific mode of termination is dependent upon whether data is being transmitted or received by the programmable device contained within the node.

A counter included within a fault detector of each of the programmable devices records abnormalities encountered by a programmable device when it attempts to transmit differential bus signals around the bus 11. These problems may arise from a fault in the bus 11 or due to a fault in a programmable device. Each abnormality encountered results in an incremental increase of the count recorded by the counter. This count is reset to zero when the tractor is powered down.

Each programmable device is programmed such that if the count recorded by its counter reaches 32 or more it stops communicating via the bus 11 with the other programmable devices. When at least one of the programmable devices stops communicating around the bus 11 as aforesaid, an isolator within each of the programmable devices isolates and checks each branch or segment of the bus 11 in turn. Once the location of the fault is found the switch driver drives the switches to terminate the CAN 10 on either side of the fault, so that the remainder of the CAN 10 may continue to function. This isolating and checking process is referred to as synchronous recovery of the CAN 10.

As well as transmitting differential bus signals around the bus 11, each of the programmable devices includes a transmitter for transmitting network management messages around the bus, and a receiver for receiving these messages. The network management messages are unique and individual for each of the programmable devices. They contain data that inform the other programmable devices whether the programmable device transmitting the message is still functioning correctly. The receiver of each of the programmable devices monitors incoming network management messages during the ignition of the vehicle, normal running of the vehicle, engine cranking of the vehicle and powering down of the vehicle.

The instrument cluster programmable device detects normal running phases of the tractor, and during engine cranking of the vehicle, it disables its fault detector, and includes data within its network management messages to inform the other programmable devices to do the same. Once the engine cranking phase of the vehicle has been completed, the instrument cluster programmable device re-enables its fault detector, and changes its network management message once again to inform the other programmable devices to do the same.

Each of the programmable devices transmits two network management messages in every 250ms time period. If a programmable device does not receive either of the two network management messages within the 250ms time period from another of the programmable devices, then a memory within this programmable device records the other programmable device as being "missing".

If only one of the two network management messages of the other programmable device is received within the 250ms time period, then the memory within the receiving programmable device records the other programmable device as having an intermittent fault. Similarly, if the network management messages received from the other programmable devices contain parameters which are inconsistent with the parameters that are transmitted by the receiving programmable device, then the memory within the receiving programmable device records the other programmable device as being "inconsistent".

If a memory within one of the programmable devices records one of the other programmable devices as missing, then the network management message of this particular programmable device is altered to inform the other programmable devices of this occurrence. A monitor within the fault detector of each of the programmable devices then monitors the programmable devices that are connected to the immediate left and to the immediate right of its programmable device in the CAN 10. If the monitor of a programmable device detects a missing programmable device to its immediate left or to its immediate right, then the CAN controller 39 of this programmable device directs its node 14-20 to terminate the CAN 10 in the relevant termination mode (Figs. 3A and 3C). If the monitor of a programmable device does not detect a missing programmable device to its immediate right or to its immediate left, then the CAN controller 39 of this programmable device directs its node 14-20 to operate in the transparent mode (Figure 3B).

Once a missing programmable device has been isolated in the CAN 10, then each of the remaining programmable devices substitutes default values for the data which they no longer receive from this programmable device. Consequently the CAN 10 continues functioning following detection of a fault.

This process of isolating a non-functioning programmable device is referred to as asynchronous recovery of the CAN 10. If during synchronous recovery of the CAN 10, activated by a fault in one of the programmable devices or in the CAN 10, a programmable device is detected as being missing, the synchronous recovery of the CAN 10 is disabled and an asynchronous recovery of the CAN 10 (as described above) will be activated.

Thus in the CAN 10 of the invention, a single fault within the bus 11 results in the synchronous recovery of the CAN 10, and the CAN 10 continues to operate at its full capability. A non-functioning programmable device results in the asynchronous recovery of the CAN 10, and the CAN 10 continues to function using default data values for the data from the non-functioning programmable device.

Further faults in the bus 11, and the isolation of still another programmable device, will not cause the CAN 10 to fail, since the programmable devices will substitute default values for the data that they are missing. This means that a number of the programmable devices will be able to function integrally with each other, and will not function independently of each other until they are completely isolated from each other by the termination of the CAN 10 at every node 14-20.

## Claims

1. A CAN (10) including a plurality of nodes (14-20), the CAN (10) having a bus (11) including two or more signal wires (12, 13) the ends of which at each node define respective first and second bus terminations (21-24), each node (14-20) including :
- switches (29, 30) for optionally connecting the first and second ends (21-24) of each respective signal wire (12, 13) together, whereby the node (14-20) is operable in a transparent mode;
- switches (29, 30) for connecting a terminating resistor (40, 41) between two signal wires (12, 13) selectively at either the first termination or the second termination;
- a programmable device (-) operatively connectable to the bus (11); and
- switches (31, 32) for connecting the programmable device selectively to either the first termination or the second termination; and
characterized in that:
- said switches (29-30) operate under the control of the programmable devices; and
- a plurality of the programmable devices each include a fault detector (-) for detecting faults in the CAN (10), the programmable devices being such as to select, on detection of a fault by a said fault detector, at each node (14-20) : termination of the CAN (10) at the first or second termination (21-24); or transparency of the node (14-20), whereby to permit continuous functioning of at least part of the CAN (10) regardless of the number or nature of the faults.

2. A CAN (10) according to claim 1, characterized in that the bus (11) is an annular network.

3. A CAN (10) according to claims 1 or 2, characterized in that the terminating resistor (40, 41) is a voltage divider.

4. A CAN (10) according to any of the preceding claims, characterized in that the CAN (10) is programmable to allow nodes (14-20) to be removed from the bus (11) without a need to reconfigure the bus (11) or remaining nodes (14-20).

5. A CAN (10) according to any of the preceding claims, characterized in that the CAN (10) is programmable to allow nodes (14-20) to be added, up to a maximum of 30, without a need to reconfigure the bus (11) or remaining nodes (14-20).

6. A CAN (10) according to any of the preceding claims, characterized in that each of the programmable devices includes a generator (-) for generating differential bus signals encoded with voltage and timing data to be transmitted via the bus (11).

7. A CAN (10) according to claim 6, characterized in that the fault detector of each of the programmable devices includes a counter (-) which records the number of errors it encounters during transmission of differential bus signals via the bus (11), whereby a said programmable device stops communicating with the other programmable devices in the CAN (10) when the number of communication errors recorded by its counter equals or exceeds a predetermined value.

8. A CAN (10) according to claim 7, characterized in that each of the programmable devices includes an isolator (-) for isolating a part of the bus (11) and wherein the CAN (10) includes means for sequentially checking the parts of the bus (11) when at least one of the programmable devices stops communicating with the other programmable devices in the CAN (10).

9. A CAN (10) according to any of the preceding claims, characterized in that each said fault detector includes :
- a transmitter (-) for transmitting unique and individual network management messages; and
- a receiver (-) for receiving and monitoring network management messages transmitted by the other programmable devices in the CAN (10).

10. A CAN (10) according to claim 9, characterized in that the fault detector of each of the programmable devices includes :
- a memory (-) for recording one of the other programmable devices in the CAN as "missing" if it fails to receive at least one network management message transmitted by the other programmable device within a chosen time period;
- a memory for recording one of the other programmable devices in the CAN as having an intermittent fault if it fails to receive all of a chosen number of network management messages transmitted by the other programmable device within a chosen time period; and
- a memory for recording one of the other programmable devices in the CAN as "inconsistent" if it receives a network management message transmitted by the other programmable device which omits parameters compatible with those transmitted by it.

11. A CAN (10) according to claim 10, characterized in that the fault detector of each of the programmable devices includes a monitor (-) for monitoring the status of the programmable devices connected to its immediate left and immediate right in the bus when a programmable device is recorded as missing in the CAN (10), said monitor causing the CAN (10) to terminate at the first or second termination (21-24) of its node (14-20) if it is connected to a missing programmable device and causing the CAN (10) to select transparency of its node (14-20) otherwise.

12. A CAN (10) according to claim 11, characterized in that the programmable devices are programmed such that, following recording of a programmable device as missing, the remaining programmable devices substitute default data for the missing programmable device to enable the CAN (10) to continue functioning.
